# EUROPÄISCHE PATENTANMELDUNG

(11) **EP 0 580 964 A1**
(43) Veröffentlichungstag der Anmeldung: **02.02.1994**
(21) Anmeldenummer: 93106538.7
(22) Anmeldetag: 22.04.1993
(51) Int. Cl.: B29C 65/18

(54) **Verfahren zum stirnseitigen Verschweissen von Kunststoffwerkstücken sowie Schweissvorrichtung hierfür**

(30) Priorität: 01.05.1992 DE 4214253
(71) Anmelder: Wegener GmbH, D-52015 Aachen (DE)
(72) Erfinder: Weissfloch, R., Dr.-Ing., W-5100 Aachen (DE)
(74) Vertreter: Paul, Dieter-Alfred, Dipl.-Ing.

(57) **Zusammenfassung**

Bei einem Verfahren zum stirnseitigen Verschweißen von plattenförmigen, steifen Kunststoffwerkstücken (46, 47) werden die Stirnseiten (48, 49) der Kunststoffwerkstücke (46, 47) zur gegenseitigen Anlage gebracht, die Kunststoffwerkstücke (46, 47) in dieser Stellung eingespannt und der Bereich der Stirnseiten (48, 49) der Kunststoffwerkstücke (46, 47) über wenigstens eine Oberflächenseite bis zur Plastifizierung erhitzt. Damit mit geringem vorrichtungsmäßigen Aufwand auch optisch einwandfreie Schweißnähte reproduzierbar erzeugt werden können, werden die Kunststoffwerkstücke (46, 47) auf beiden Oberflächenseiten durch wenigstens eine den Bereich der Stirnseiten (48, 49) der Kunststoffwerkstücke (46, 47) abdeckende Führungswandungen (40̸, 41) geführt und die Stirnseiten (48, 49) durch die Führungswandungen (40̸, 41) hindurch erhitzt.

## Beschreibung

Die Erfindung betrifft ein Verfahren zum stirnseitigen Verschweißen von insbesondere plattenförmigen, steifen Kunststoffwerkstücken, bei dem die Stirnseiten der Kunststoffwerkstücke zur gegenseitigen Anlage gebracht, die Kunststoffwerkstücke in dieser Stellung eingespannt und der Bereich der Stirnseiten der Kunststoffwerkstücke über wenigstens einer Oberflächenseite bis zur Plastifizierung erhitzt werden. Die Erfindung bezieht sich desweiteren auf eine Schweißvorrichtung zur Durchführung dieses Verfahrens mit gegenüberliegenden Spanneinrichtungen zum Fixieren der beiden zu verschweißenden Kunststoffwerkstücke mit den Stirnseiten gegeneinander sowie mit wenigstens einer Heizeinrichtung zur Plastifizierung der Stirnseiten.

Beim sogenannten Heizelementschweißen (Ullmanns Enzyklopädie der technischen Chemie, 4. Auflage, 1978, Band 15, Seite 340̸) werden Kunststoffplatten aus einem Thermoplast an den zu verbindenden Stirnseiten durch ein Heizschwert bis zur Plastifizierung erwärmt und dann durch Anpreßdruck miteinander verbunden. Dies geschieht in Schweißvorrichtungen, wie sie beispielsweise in dem DE-GM 85 31 748.9 beschrieben sind. Solche Schweißvorrichtungen weisen einen langgestreckten Grundrahmen auf, an dessen Oberseite zwei sich jeweils in Längsrichtung parallel erstreckende Spanneinrichtungen angeordnet sind. Diese Spanneinrichtungen bestehen im wesentlichen jeweils aus einem in Längsrichtung sich erstreckenden Spanntisch und einem darüber angeordneten, sich ebenfalls in Längsrichtung erstreckenden Spannbalken. Jeder Spannbalken ist mit einer Vielzahl von in Längsrichtung nebeneinander angeordneten, auf den zugehörigen Spanntisch senkbaren Spannplatten versehen. Die Spanneinrichtungen sind jeweils komplett in Querrichtung synchron zueinander oder voneinander weg bewegbar.

Zwischen den Spanneinrichtungen befindet sich eine sich ebenfalls in Längsrichtung erstreckende Einheit aus einem Heizschwert und einem Anschlagbalken, wobei der Anschlagbalken unterhalb des Heizschwertes angeordnet ist. Diese Einheit sitzt auf mehreren, vertikalen Führungsstangen, die über Pneumatikzylinder vertikal verfahrbar sind.

Ein Schweißvorgang auf einer solchen Schweißeinrichtung wird dadurch eingeleitet, daß die Spanneinrichtungen gegen den Anschlagbalken verfahren werden. Es werden dann die Kunststoffplatten in die Spanneinrichtung derart eingelegt, daß sie an dem Anschlagbalken zur Anlage kommen. Nach Festklemmen der Kunststoffteile durch Absenken der Spannplatten gegen den jeweiligen Spanntisch werden die Spanneinrichtungen auseinandergefahren und der Anschlagbalken aus dem Spalt so weit heruntergefahren, bis das Heizschwert auf Höhe der zu verschweißenden Kunststoffplatten liegt. Die Spanneinrichtungen werden dann wieder gegeneinander bewegt, bis die Kunststoffteile mit ihren zu verbindenden Kanten an dem Heizschwert anliegen. Sie erhitzen sich an dem Heizschwert und werden dann nach Wegfahren des Heizschwertes unter Aufbringung eines Schließdruckes durch die Spanneinrichtungen gegeneinander gepreßt. Nach dem Erkalten ist die Verbindung zwischen den Kunststoffteilen fertig.

Bei diesem vorbekannten Verfahren quillt Kunststoffmaterial im Bereich der Schweißnaht nach beiden Seiten infolge der Druckeinwirkung in der Ebene der Kunststoffwerkstücke heraus, so daß die Schweißnaht optisch nicht befriedigt. Das herausgequollene Material muß deshalb im Regelfall durch einen weiteren Verfahrensschritt entfernt werden. Außerdem ist die Maßhaltigkeit bzw. Reproduzierbarkeit nicht zufriedenstellend, da sie vom Material, der Erhitzung und dem aufgeprägten Druck abhängt und auch Anschläge für die Bewegung der Spanneinrichtungen keine Reproduzierbarkeit garantieren. Was die konstruktive Gestaltung und Vorrichtung angeht, ist der Antrieb und die Kinematik der Spanneinrichtungen zu deren Bewegung gegeneinander und voneinander weg sehr aufwendig, da über diesen Antrieb und die Kinematik auch der Fügedruck erzeugt werden muß.

Das vorgenannte Verfahren und die vorbeschriebene Vorrichtung eignen sich nicht für das Verschweißen von plattenförmigen, steifen Kunststoffwerkstücken aus einem faserverstärkten Thermoplast. Solche Kunststoffwerkstücke - verstärkt mit Glas-, Kohlenstoff- oder Graphitfasern - werden jedoch zunehmend verwendet, und zwar sowohl mit Kurzfasern als auch mit Endlosfasern. Im letzteren Fall können die Fasern in Mattenform entweder regellos oder als Faserstränge oder -bändchen vorliegen, die zu Gewebematten verarbeitet sind. Insbesondere bei neueren Kunststoffen mit hohen Verarbeitungstemperaturen, wie beispielse PEEK (Polyätherätherketon), PPS (Polyphenylensulfid) oder PEI (Polyätherimid) werden häufig Faserverstärkungen verwendet und ergeben dann hochfeste Kunststoffwerkstücke, die vor allem im Flugzeugbau zur Anwendung kommen. Mit solchen Kunststoffwerkstücken gelingt das bekannte Heizelementschweißen nicht. Die Schweißnaht hat dann eine so geringe Festigkeit, daß das damit hergestellte Bauteil unbrauchbar ist.

Für das Verschweißen solcher Werkstücke wird in der DE-OS 39 13 723 ein Verfahren vorgeschlagen, bei dem in die Stirnseiten der Kunststoffwerkstücke bis in die faserverstärkten Bereiche hinein Ausnehmungen dergestalt eingeformt werden, daß sich gegenseitig ergänzende Überlappungsstege gebildet werden, die beim Zusammenfügen der Kunststoffwerkstücke einen Überlappungsbereich ergeben. Nach dem Zusammenfügen wird der Bereich der Schweißnaht mit Heizschwertern bis zur Plastifizierung mit Schmelzwärme beaufschlagt, wobei gleichzeitig ein Druck in zwei Richtungen auf die Schweißnaht ausgeübt wird, und zwar einerseits gegeneinander gerichtet und andererseits quer zur Ebene der Kunststoffwerkstücke bzw. deren Flachseiten. Es werden also nicht mehr - wie bei dem bekannten Heizelementschweißen - allein die Stirnseiten der Kunststoffwerkstücke miteinander verbunden, sondern es werden im Randbereich beider Stirnseiten komplementäre Ausnehmungen eingeformt, beispielsweise eingefräst, so daß Überlappungsstege in einem Überlappungsbereich entstehen, die beim Zusammenfügen der Kunststoffwerkstücke übereinander bzw. nebeneinander zu liegen kommen. Erst dann wird gleichzeitig Wärme und Druck auf den Überlappungsbereich ausgeübt, und zwar Druck in zwei zueinander senkrecht stehenden Ebenen.

Mit diesem Verfahren konnten erstmals Kunststoffwerkstücke aus faserverstärktem Thermoplat stirnseitig so miteinander verschweißt werden, daß die Schweißnaht eine brauchbare Festigkeit erhielt. Allerdings zeigte sich bei der praktischen Ausführung, daß es insbesondere bei der Verarbeitung von Thermoplasten, die zu ihrer Plastifizierung hohen Temperaturen bis über 40̸0̸°C ausgesetzt werden müssen, die für die Erhitzung und gleichzeitige Druckausübung verwendeten Heizschwerter an dem Überlappungsbereich und damit an den Kunststoffteilen hängenblieben und nur mit Gewalt voneinander gelöst werden konnten, was im Regelfall eine Zerstörung der Schweißnaht zur Folge hatte. Dies geschah auch dann, wenn die Heizschwerter entsprechend der Lehre nach dem DE-GM 89 0̸5 278.1 an der Anlagefläche mit einer Nickelbasishartlegierung beschichtet waren. Versuche mit anderen, antiadhäsiv wirkenden Beschichtungen, wie beispielsweise Polytetrafluorethylen, schlugen gleichfalls fehl, da insbesondere letzteres Material der Erhitzung auf Temperaturen, die die obengenannten hochhitzebeständigen Thermoplaste zum Schmelzen bringen, nicht standhält.

Ein weiterer Nachteil des Vorgängerverfahrens besteht darin, daß es insbesondere im Randbereich der Heizschwerter zu Delaminierungsvorgängen kam, die eine weitere Schwächung der Schweißnaht zur Folge hatte. Schließlich ist die für die Durchführung des Verfahrens erforderliche Schweißvorrichtung außerordentlich aufwendig, da auch hier die Spanneinrichtungen gegeneinander verfahrbar sein müssen und über sie auch ein erheblicher Druck ausgeübt werden muß und da ferner die beiden Heizschwerter derart ausgebildet und angetrieben sein müssen, daß mit ihrer Hilfe ein Druck quer zur Spannebene erzeugt werden kann.

Das vorbeschriebene Verfahren ist deshalb weiterentwickelt worden (vgl. DE-PS 40̸ 33 646.8). Hierbei ist man auf ein zweistufiges Verfahren übergegangen, bei dem zunächst eine Erhitzung des Überlappungsbereichs der Kunststoffwerkstücke bis zur Plastifizierung durchgeführt wird, und zwar ohne zusätzliche Druckeinwirkung. Diese Art der Erhitzung führt nicht zum Anhaften der Heizschwerter, so daß sie wieder problemlos von den Kunststoffwerkstücken gelöst werden können. Erst in einer zweiten Stufe findet dann eine Verpressung des zuvor plastifizierten Bereichs und der beidseitig an diese anschließende Nachbarbereiche quer zur Ebene der Kunststoffwerkstücke ohne zusätzliche Beheizung statt. Dabei eröffnet das zweistufige Verfahren die Möglichkeit, die Anlageflächen der Preßstempel mit antiadhäsiv wirkenden Materialen, beispielsweise Polytetrafluorethylen, zu beschichten, selbst wenn deren Plastifizierungs- und/oder Zersetzungstemperatur weit unterhalb der Plastifizierungstemperatur des verarbeiteten Kunststoffwerkstückes liegt.

Mit diesem Verfahren wird nicht nur ein Anheften der Heizschwerter und auch der Preßstempel vermieden, sondern es wird auch eine Einschnürung des plastifizierten Bereichs und damit eine Delaminierung verhindert oder - soweit sie bei der Erhitzung aufgetreten - wieder zurückgebildet. Nachteilig ist immer noch, daß die Vorrichtung wegen ihrer zweistufigen Ausbildung aufwendig ist, und zwar sowohl konstruktiv als auch bezüglich des Raumaufwandes.

Der Erfindung liegt die Aufgabe zugrunde, ein Verfahren zum stirnseitigen Verschweißen von plattenförmigen, steifen Kunststoffwerkstücken bereitzustellen, durch das sich mit geringem vorrichtungsmäßigem Aufwand auch optisch einwandfreie Schweißnähte reproduzierbar erzeugen lassen, wobei das Verfahren sich auch für die Verschweißung von faserverstärkten Kunststoffwerkstücken eignen soll.

Diese Aufgabe wird erfindungsgemäß dadurch gelöst, daß die Kunststoffwerkstücke auf beiden Oberflächenseiten durch wenigstens eine den Bereich der Stirnseiten der Kunststoffwerkstücke abdeckende Führungswandung, insbesondere Führungsplatte, geführt und die Stirnseiten durch die Führungswandung(en) hindurch erhitzt werden.

Nach der Erfindung werden also die Kunststoffwerkstücke zwischen den Spanneinrichtungen durch auf beiden Oberflächenseiten anliegende Führungswandungen eingefaßt, und zwar in der Weise, daß das Material der Kunststoffwerkstücke nicht quer zu den Oberflächenseiten ausweichen kann. In der Spannebene, d. h. parallel zu den Oberflächenseiten wird ein Ausweichen durch die Spanneinrichtungen verhindert. Der für die Verschweißung notwendige Schweißdruck entsteht dabei durch die vorbeschriebene Behinderung der temperaturbedingten Ausdehnung des Kunststoffmaterials, d. h. das Kunststoffmaterial erzeugt sich den Schweißdruck selbst, ohne daß es hierfür des Aufprägens zusätzlichen Druckes von außen bedarf.

Es liegt jedoch im Rahmen der Erfindung, wenn zusätzlich in der Spannebene von außen Druck zur Erhöhung des Anpreßdruckes an den Stirnseiten der Kunststoffwerkstücke ausgeübt wird und/oder wenn quer zur Spannebene - beispielsweise über die Heizeinrichtung - Druck auf die Führungswandung, um diese besser abzustützen, aufgeprägt wird, wenn sich dies als erforderlich erweisen sollte. Zumindest bei Verwendung von nicht faserverstärkten Platten reicht jedoch der durch die Erhitzung erzeugte Innendruck im Bereich der Schweißnaht aus, um den notwendigen Schweißdruck zu erzeugen. Es ist dann keine zusätzliche Druckaufprägung von außen notwendig, wodurch die Schweißvorrichtung konstruktiv außerordentlich einfach wird.

Bei sehr dünnen, plattenförmigen Kunststoffwerkstücken kann unter Umständen die Erhitzung von einer Oberflächenseite her ausreichend sein, um die Schweißnaht über die gesamte Dicke des Werkstückes zu plastifizieren. Bei dickeren Werkstücken ist die Erhitzung von beiden Oberflächenseiten her vorzuziehen.

Es ist zweckmäßig, die Führungswandungen ebenfalls einzuspannen, bevor sie erhitzt werden. Dies geschieht am einfachsten dadurch, daß die Kunststoffwerkstücke über die Führungswandungen eingespannt werden, also zusammen mit diesen verspannt werden. Dabei wird ein besonders guter Halt erreicht, wenn auf beiden Oberflächenseiten jeweils wenigstens eine Führungswandung verwendet wird, die den Bereich der Stirnseiten der Kunststoffwerkstücke übergreift und mit beiden Kunststoffwerkstücken verspannt ist. Im einfachsten Fall werden also die Stirnseiten der Kunststoffwerkstücke auf beiden Oberflächenseiten durch jeweils eine Führungswandung überbrückt, die auf beiden Seiten der Stirnseiten zusammen mit den Kunststoffwerkstücken verspannt sind.

In bevorzugter Ausführung werden die Kunststoffwerkstücke beim Verschweißen nicht nur von den Oberflächenseiten her, sondern auch an den Seitenflächen wenigstens im Bereich der Stirnseiten geführt, und zwar durch entsprechende Seitenwandungen. Auf diese Weise wird die Schweißnaht vollständig eingeschlossen, wodurch sich beim Verschweißen aufgrund der temperaturbedingten Ausdehnung ein hoher Innendruck einstellt, was der Qualität der Schweißnaht zugute kommt.

Nach einem weiteren Merkmal der Erfindung ist vorgesehen, daß die Führungswandungen im Bereich der Stirnseiten der Kunststoffwerkstücke nach dem Erhitzen gegen weitere Hitzeeinwirkung abgeschirmt werden, um ein schnelles Abkühlen der Schweißnaht zu ermöglichen. Um dies zu beschleunigen, sollten die Führungswandungen im Bereich der Stirnseiten der Kunststoffwerkstücke nach dem Erhitzen zusätzlich noch mit einem Kühlmittel beaufschlagt werden. Als Kühlmittel kommt insbesondere Druckluft in Frage.

Die Schweißvorrichtung zur Durchführung des Verfahrens zeichnet sich erfindungsgemäß dadurch aus, daß Führungswandungen vorgesehen sind, die in eingespanntem Zustand der Kunststoffwerkstücke an deren beiden Oberflächenseiten führend und den Bereich der Stirnseiten der Kunststoffwerkstücke abdeckend anliegen und denen zumindest teilweise die Heizeinrichtung(en) zugeordnet ist bzw. sind. Gegenüber den bekannten Schweißvorrichtungen sind im einfachsten Fall zusätzlich nur zwei Führungswandungen erforderlich, die - soweit ihnen eine Heizeinrichtung zugeordnet sind - wärmeleitfähig sein sollten und die die Kunststoffwerkstücke in eingespanntem Zustand an diesen anliegend einfassen, und zwar vornehmlich im Bereich der Stirnseiten der Kunststoffwerkstücke. Dabei ist mit dem Begriff wärmeleitfähig ein solcher Bereich von Wärmewiderstand gemeint, wie er beispielsweise bei Metallen wie Aluminium und Stahl gegeben ist, damit die Führungswandungen den Wärmedurchgang nicht zu sehr behindern und damit ferner nach der Erhitzung über die Führungswandungen eine rasche Wärmeabfuhr möglich ist. Insoweit gute Eigenschaften haben auch z. B. kohlefaserverstärkte Kunststoffplatten, wobei die Matrix z. B. PEEK sein kann.

Die Führung durch die Führungswandungen setzt nicht notwendigerweise voraus, daß die Führungswandungen mit den Kunststoffwerkstücken eingespannt werden, sondern es kann schon ausreichen, daß die Führungswandungen in der Schweißvorrichtung in Anlage an den eingespannten Kunststoffwerkstücken gehalten werden, so daß sie bei Entstehung des durch die Aufheizung bewirkten Innendruckes nicht wesentlich ausweichen können.

Da der vorbeschriebene Innendruck im allgemeinen für die Herstellung der Schweißnaht ausreicht, ist die konstruktive Gestaltung der Vorrichtung gegenüber den vorbekannten Ausführungen sehr einfach. Für die Spanneinrichtungen ist nicht mehr eine Kinematik und ein Antrieb zu deren Bewegung gegeneinander und für die Druckausübung erforderlich. Entsprechendes gilt auch für die Heizeinrichtung(en), selbst wenn zwei Heizeinrichtungen vorgesehen sind, um dickere Werkstücke plastifizieren zu können.

Eine Erhöhung des Innendrucks läßt sich dadurch erreichen, daß quer zu den Führungswandungen Seitenwandungen vorgesehen sind, die an den Seitenflächen der Kunststoffwerkstücke den Bereich der Stirnseiten abdeckend anliegen, wobei es zweckmäßig ist, daß die Seitenwandungen quer zu ihren Anlagenflächen bewegbar geführt sind, damit eine Anpassung an verschiedene Breiten von Kunststoffwerkstücken möglich ist. Die Schweißnaht wird auf diese Weise allseitig eingeschlossen. Die Seitenwandungen sollten dabei wärmeisolierende Eigenschaften haben.

Die Führungswandungen sind zweckmäßigerweise auf den einander zugewandten Seiten sehr glatt oder mit einer antiadhäsiven Beschichtung versehen, beispielsweise aus Polytetrafluoretylen, oder einem flüssigen oder pulverförmigem Trennmittel. Dies vermeidet ein schädliches Anhaften des plastifizierten Materials an den Führungswandungen.

Nach einem weiteren Merkmal der Erfindung ist vorgesehen, daß die Führungswandungen bis in die Spanneinrichtungen reichen und von diesen beaufschlagt sind. Dies gibt den Führungswandungen einen besonders guten Halt und eine feste Anlage an den Kunststoffwerkstücken. Dabei sollte wenigstens eine Führungswandung auf jeder Seite der Kunststoffwerkstücke in eingespanntem Zustand bis in beide Spanneinrichtungen reichen und von diesen beaufschlagt sein. Um eine gute Wärmeableitung nach der Erhitzung der Stirnseiten zu erzielen, sollten die Spanneinrichtungen dann gut wärmeleitende Spannbacken für die Anlage an den Führungswandungen haben, beispielsweise aus einer Stahl- oder Aluminiumlegierung.

Nach der Erfindung ist ferner vorgesehen, daß die Spanneinrichtungen über die Führungswandungen miteinander verbunden sind, die Führungswandungen also integrale Teile der Spanneinrichtungen sind.

Es ist desweiteren vorgeschlagen, daß im Spalt jeder Heizeinrichtung eine Abschirmung zur Führungswandung zugeordnet ist, wobei die Abschirmung für die Beheizung der Führungswandung(en) aus der Abschirmstellung wegbewegbar ist. Bei der Abschirmung kann es sich beispielsweise um wenigstens einer Abschirmplatte handeln, die schwenkbar gelagert ist. Die Abschirmung hat den Zweck, die Wärmeeinwirkung durch die Heizeinrichtung(en) nach Erreichen der Plastifizierung der Stirnseiten zu unterbrechen, um ein schnelles Abkühlen der Schweißnaht zu ermöglichen. Dies kann durch eine Kühlmittelzuführung für die Beaufschlagung der Außenseite(n) der Führungswandung(en), die einer Heizeinrichtung zugeordnet ist bzw. sind, unterstützt werden.

Da Schweißvorrichtungen gewöhnlich sehr langgestreckt ausgebildet sind, eignet sich als Heizeinrichtung insbesondere ein an sich bekanntes Heizschwert. Dabei ist es von Vorteil, wenn jedes Heizschwert quer zur Spannebene bewegbar ist, damit es an die Außenseite der jeweils zugehörigen Führungswandung herangefahren werden kann, wenn die Stirnseiten der Kunststoffwerkstücke erhitzt werden sollen, und von dieser wieder weggefahren werden kann, wenn die Aufheizung beendet werden soll. Diese Verfahrbarkeit schafft auch Platz für die vorbeschriebene Abschirmung.

Es ist nicht ausgeschlossen, daß eine Gasbeheizung vorgesehen wird. Bewährt haben sich jedoch elektrisch beheizte Heizschwerter, die dann bis in Anlage an die zugehörige Führungswandung bewegbar sein sollten.

Im übrigen ist es für die Durchführung des Verfahrens nicht erforderlich, daß sich die Stirnseiten der Kunststoffwerkstücke senkrecht zur Spannebene erstrecken. Es liegt im Rahmen der Erfindung, daß insbesondere dann, wenn faserverstärkte Kunststoffwerkstücke verwendet werden, in die Stirnseiten Ausnehmungen eingeformt werden, wie sie sich aus der DE-OS 39 13 723 ergeben.

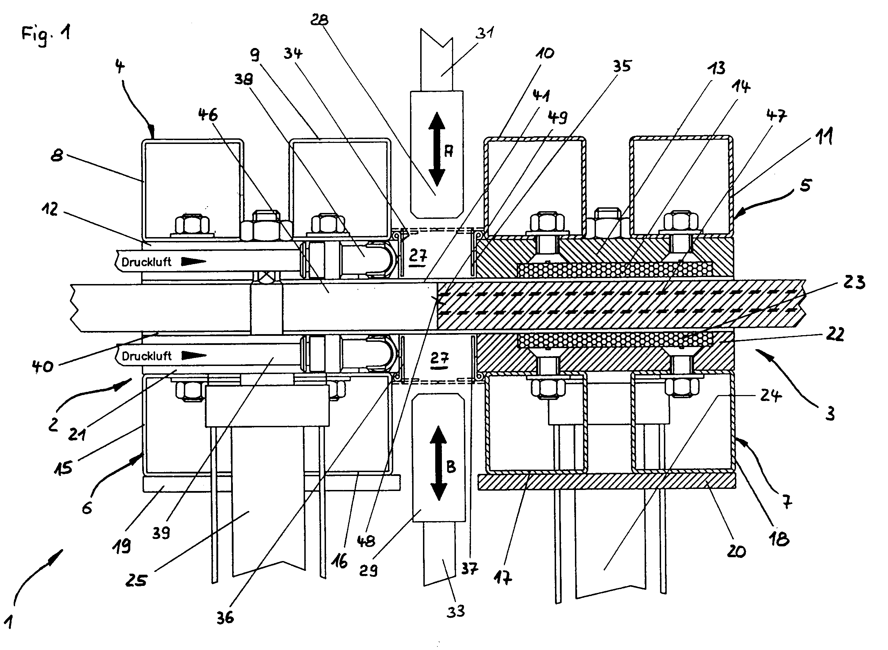

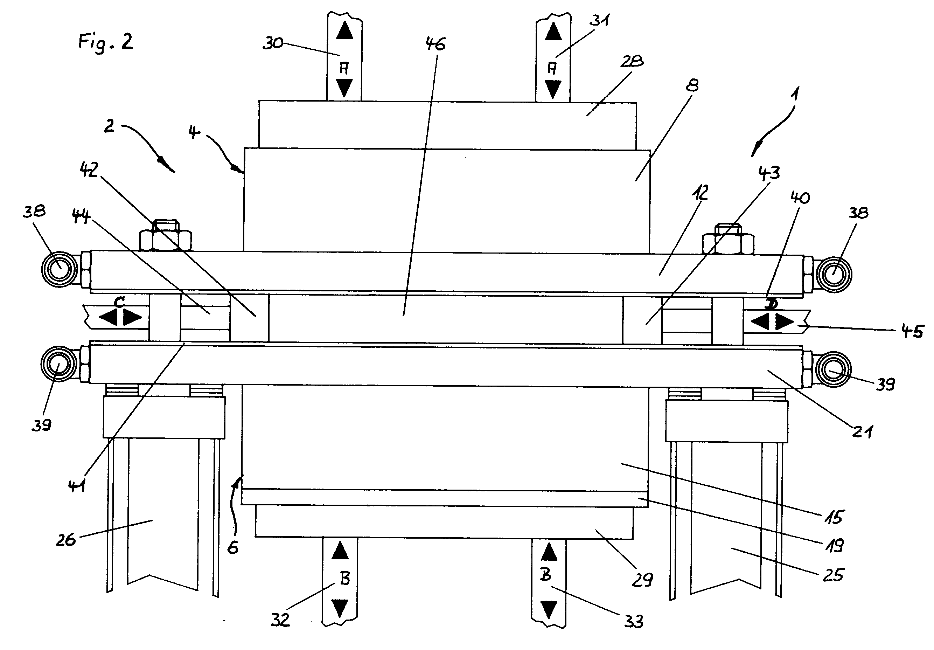

In der Zeichnung ist die Erfindung an Hand eines Ausführungsbeispiels näher veranschaulicht. Es zeigen:
- Figur (1): eine Schweißvorrichtung von ihrer Stirnseite her gesehen (linker Teil in der Ansicht und rechter Teil im Querschnitt) und
- Figur (2): eine gegenüber Figur 1 um 90̸° gedrehte Seitenansicht der Schweißvorrichtung
Die Schweißvorrichtung (1) gemäß den Figuren weist einen aus Gründen der Übersichtlichkeit hier nicht dargestellten Grundrahmen auf, wie er sich in ähnlicher Weise aus Figur (3) der DE-OS 39 13 723 entnehmen läßt. In dem Grundrahmen sind zwei Spanneinrichtungen (2, 3) nebeneinander angeordnet. Sie weisen jeweils einen oberen Spannbalken (4, 5) auf, wobei jedem oberen Spannbalken (4, 5) ein darunterliegender, also unterer Spannbalken (6, 7) zugeordnet ist. Jeder obere Spannbalken (4, 5) weist zwei nebeneinander angeordnete, im Querschnitt quadratische Spannholme (8, 9) bzw. (10̸, 11) auf, die hohl ausgebildet sind und an deren Unterseite jeweils eine beide Spannholme (8, 9) bzw. (10̸, 11) verbindende Spannplatte (12, 13) angeschraubt sind. Die Spannplatten (12, 13) bestehen aus wärmeleitfähigem Material, also aus einer Stahl- oder Aluminiumlegierung. In die Unterseite der Spannplatten (12, 13) ist jeweils eine sich über die gesamte Länge erstreckende Ausnehmung eingeformt, in die eine Wärmeisolierschicht (14) eingesetzt ist, die untenseitig bündig mit der Unterseite der Spannplatte (13) abschließt. Beide oberen Spannbalken (4, 5) sind an ihren stirnseitigen Enden ortsfest im Grundrahmen verankert, also unbeweglich gehalten.

Die unteren Spannbalken (6, 7) sind ähnlich wie die oberen Spannbalken (4, 5) aufgebaut. Sie weisen ebenfalls jeweils zwei im Querschnitt quadratische Spannholme (15, 16) bzw. (17, 18) auf. Die Spannholme (15, 16) bzw. (17, 18) jedes unteren Spannbalkens (6, 7) sind jeweils über eine Abschlußplatte (19, 20) an der Unterseite miteinander verbunden. An ihren Oberseiten sind an die Spannholme (15, 16) bzw. (17, 18) jedes unteren Spannbalkens (6, 7) jeweils eine Spannplatte (21, 22) angeschraubt, wobei die Spannplatten (21, 22) die jeweils zugehörigen Spannholme (15, 16) bzw. (17, 18) miteinander verbinden. Auch diese Spannplatten (21, 22) weisen an ihrer Oberseite über ihre gesamte Länge sich erstreckende, flache Ausnehmungen auf, in die jeweils eine Wärmeisolierschicht (23) eingelassen ist, welche bündig mit der Oberseite der zugehörigen Spannplatte (21) bzw. (22) abschließt.

Die Spannplatten (21, 22) sind vertikal beweglich geführt und ruhen jeweils auf zwei pneumatischen betätigbaren Spannzylinder (24, 25, 26). Mit Hilfe dieser Spannzylinder (24, 25, 26) können die unteren Spannbalken (6, 7) vertikal in Richtung der oberen Spannbalken (4, 5) oder in umgekehrter Richtung bewegt werden.

Zwischen den Spanneinrichtungen (2, 3) befindet sich ein Spalt (27), in welchen von oben und unten je ein Heizschwert (28, 29) hineinragt. Die Heizschwerter (28, 29) sind mit elektrisch beaufschlagbaren Heizstäben durchsetzt und können deshalb auf die erforderliche Temperatur erhitzt werden. Sie hängen bzw. stützen sich ab an jeweils zwei Streben (30̸, 31) bzw. (32, 33) und sind entsprechend den Doppelpfeilen A, B in beiden Richtungen vertikal verfahrbar, beispielsweise mit Hilfe hier nicht näher dargestellter Pneumatikzylinder.

An den einander zugewandten Seiten der oberen Spannbalken (4, 5) und der unteren Spannbalken (6, 7) sind Abschirmbleche (34, 35) bzw. (36, 37) verschwenkbar um jeweils eine sich in Längsrichtung erstreckende Drehachse gelagert. In der mit durchgezogenen Linien gezeigten Stellung ist der Spalt (27) geöffnet, d. h. die Abschirmbleche (34, 35, 36, 37) erstrecken sich quer zur Spannebene der Spanneinrichtungen (2, 3). Durch hier nicht näher dargestellte Antriebsmittel können sie jeweils um 90̸° in die gestrichelt dargestellte waagerechte Lage verschwenkt werden, wenn sich die Heizschwerter (28, 29) in der gezeigten, jeweils herausgefahrenen Stellung befinden. Auf diese Weise ist der Spalt (27) abgeschirmt.

Die in der Figur (1) links dargestellte Spanneinrichtung (2) hat eine Kühleinrichtung, die zwei Druckluftzuführrohre (38, 39) aufweist, wobei das obere Druckluftzuführrohr (38) im oberen Spannbalken (4) in der Ebene der zugehörigen Spannplatte (12) und das untere Druckluftzuführrohr (39) im unteren Spannbalken (6) in der Ebene der zugehörigen Spannplatte (21) verlaufen. Beide Druckluftzuführrohre (38, 39) gehen bis zur Innenfläche der Spanneinrichtung (2) und verlaufen dort in Längsrichtung der Spanneinrichtung (2) senkrecht zur Zeichnungsebene gemäß Figur (1), und zwar über deren gesamten Länge. In diesem Bereich haben die Druckluftzuführrohre (38, 39) hier nicht näher dargestellte Austrittsdüsen, die bei waagerecht geschwenkten Abschirmblechen (34, 35, 36, 37) Druckluft in den Spalt (27) blasen.

Zu den Spanneinrichtungen (2, 3) gehören Führungsplatten (40̸, 41), die parallel zur Spannebene über die gesamte Länge der Spanneinrichtung (2, 3) verlaufen, wobei jede Führungsplatte (40̸, 41) beide Spanneinrichtungen (2, 3) unter Überbrückung des Spaltes (27) durchsetzt. Die Führungsplatten (40̸, 41) können mit den jeweils zugehörigen Spannbalken (4, 5) bzw. (6, 7) verbunden sein.

Wie aus Figur (2) zu ersehen ist, hat die Schweißvorrichtung (1) Seitenstempel (42, 43) die horizontal in den Richtungen der Doppelpfeile C, D bewegbar sind und sich zumindest über den Spalt (27) erstrecken. Die Seitenstempel (42, 43) sind mit Führungsstangen (44, 45) verbunden, die - was hier nicht gezeigt ist - mit Kolbenstangen von Pneumatikzylindern zusammenwirken.

Im vorliegenden Fall sind zwischen den Führungsplatten (40̸, 41) zwei ebene Kunststoffwerkstücke (46, 47) derart eingeführt, daß sie mit ihren Stirnseiten (48, 49) aneinanderliegen, und zwar in der Mitte zwischen den beiden Spanneinrichtungen (2, 3). Zum Einlegen der Kunststoffwerkstücke (46, 47) zwischen die Führungsplatten (40̸, 41) werden die unteren Spannbalken (6, 7) durch entsprechende Ansteuerung der Spannzylinder (24, 25, 26) abgesenkt. Nach dem Einschieben werden die Spannzylinder (24, 25, 26) unter Druck gesetzt, so daß die Führungsplatten (40̸, 41) an den Oberflächenseiten - wie angezeigt - zur Anlage kommen und auf diese Weise die Kunststoffwerkstücke (46, 47) zwischen den Spannplatten (12, 21) bzw. (13, 22) und den Führungsplatten (40̸, 41) fest und unverrückbar verspannt werden. Gleichzeitig werden die Seitenstempel (42, 43) jeweils in Richtung auf die Seitenflächen der Kunststoffwerkstücke (46, 47) bis zu deren Anlage bewegt und in dieser Stellung gehalten Anschließend werden die Heizschwerter (28, 29) zur Anlage an die Außenseiten der Führungsplatten (40̸, 41) gebracht. Sie erhitzen die Stirnseiten (48, 49) und die daran angrenzenden Bereiche der Kunststoffwerkstücke (46, 47) durch die Führungsplatten (40̸, 41) hindurch bis zur Plastifizierung. Da die temperaturbedingte Wärmeausdehnung durch die unverrückbare Verspannung von Führungsplatten (40̸, 41) und Kunststoffwerkstücken (46, 47) in den Spanneinrichtungen (2, 3) und den Seitenstempeln (42, 43) und die außenseitige Führung durch die Führungsplatten (40̸, 41) behindert ist, entsteht im Kunststoffmaterial ein Innendruck, der für einen eine haltbare Verschweißung garantierenden Schweißdruck sorgt.

Nach ausreichender Plastifizierung des Bereiches der Stirnseiten (48, 49) werden die Heizschwerter (28, 29) wieder in die gezeigte Stellung zurückgefahren. Die Abschirmbleche (34, 35, 36, 37) werden in die gestrichelt dargestellte, horizontale Stellung verschwenkt und schirmen auf diese Weise die Führungsplatten (40̸, 41) im Bereich des Spaltes (27) von der Wärmestrahlung der Heizschwerter (28, 29) ab. Gleichzeitig werden die Druckluftzuführrohre (38, 39) mit Druckluft beaufschlagt, welche dann in den Spalt (27) eintritt und die Außenseiten der Führungsplatten (40̸, 41) kühlt. Dies sorgt zusammen mit der Wärmeabfuhr über die Führungsplatten (40̸, 41) und die Spannplatten (12, 13, 21, 22) für eine schnelle Wärmeabfuhr und damit ein rasches Erkalten der Schweißnaht. Im Anschluß daran kann dann das zusammengeschweißte Werkstück nach Herunterfahren der unteren Spannbalken (6, 7) und Auseinanderfahren der Seitenstempel (42, 43) aus der Schweißvorrichtung (1) entnommen werden.

## Patentansprüche

1. Verfahren zum stirnseitigen Verschweißen von plattenförmigen, steifen Kunststoffwerkstücken (46, 47), bei denen die Stirnseiten (48, 49) der Kunststoffwerkstücke (46, 47) zur gegenseitigen Anlage gebracht, die Kunststoffwerkstücke (46, 47) in dieser Stellung eingespannt und der Bereich der Stirnseiten (48, 49) der Kunststoffwerkstücke (46, 47) über wenigstens eine Oberflächenseite bis zur Plastifizierung erhitzt werden, dadurch gekennzeichnet, daß die Kunststoffwerkstücke (46, 47) auf beiden Oberflächenseiten durch wenigstens eine den Bereich der Stirnseiten (48, 49) der Kunststoffwerkstücke (46, 47) abdeckende Führungswandung (40̸, 41) geführt und die Stirnseiten (48, 49) durch die Führungswandungen (40̸, 41) hindurch erhitzt werden.

2. Verfahren nach Anspruch (1),
dadurch gekennzeichnet, daß den Stirnseiten (48, 49) von außen kein zusätzlicher Druck aufgeprägt wird.

3. Verfahren nach Anspruch (1) oder (2),
dadurch gekennzeichnet, daß die Stirnseiten (48, 49) der Kunststoffwerkstücke (46, 47) von beiden Oberflächenseiten her erhitzt werden.

4. Verfahren nach einem der Ansprüche (1) bis (3),
dadurch gekennzeichnet, daß die Führungswandungen (40̸, 41) ebenfalls eingespannt werden, bevor sie erhitzt werden.

5. Verfahren nach Anspruch (4),
dadurch gekennzeichnet, daß die Kunststoffwerkstücke (46, 47) über die Führungswandungen (40̸, 41) eingespannt werden.

6. Verfahren nach Anspruch (5),
dadurch gekennzeichnet, daß auf beiden Oberflächenseiten der Kunststoffwerkstücke (46, 47) jeweils wenigstens eine Führungswandung (40̸, 41) verwendet wird, die den Bereich der Stirnseiten (48, 49) der Kunststoffwerkstücke (46, 47) übergreift und mit beiden Kunststoffwerkstücken (46, 47) verspannt wird.

7. Verfahren nach einem der Ansprüche (1) bis (6),
dadurch gekennzeichnet, daß die Kunststoffwerkstücke (46, 47) beim Verschweißen an den Seitenflächen wenigstens im Bereich der Stirnseiten (48, 49) durch Seitenwandungen (42, 43) geführt werden.

8. Verfahren nach einem der Ansprüche (1) bis (7),
dadurch gekennzeichnet, daß die erhitzten Führungwandungen (40̸, 41) im Bereich der Stirnseiten (48, 49) der Kunststoffwerkstücke (46, 47) nach dem Erhitzen gegen weitere Hitzeeinwirkung abgeschirmt werden.

9. Verfahren nach Anspruch (8),
dadurch gekennzeichnet, daß die erhitzten Führungswandungen (40̸, 41) im Bereich der Stirnseiten der Kunststoffwerkstücke (46, 47) nach dem Erhitzen mit einem Kühlmittel beaufschlagt werden.

10. Schweißvorrichtung zur Durchführung des Verfahrens nach einem der Ansprüche (1) bis (9) mit gegenüberliegenden Spanneinrichtungen (2, 3) zum Fixieren der beiden zu verschweißenden Kunststoffwerkstücke (46, 47) mit den Stirnseiten (48, 49) gegeneinander sowie mit wenigstens einer Heizeinrichtung (28, 29) zur Plastifizierung der Stirnseiten (48, 49),
dadurch gekennzeichnet, daß Führungswandungen (40̸, 41) vorgesehen sind, die in eingespanntem Zustand der Kunststoffwerkstücke (46, 47) an deren beiden Oberflächenseiten führend und den Bereich der Stirnseiten (48, 49) der Kunststoffwerkstücke (37, 38) abdeckend anliegen und denen zumindest teilweise die Heizeinrichtung(en) (27, 28) zugeordnet ist bzw. sind.

11. Schweißvorrichtung nach Anspruch (10̸),
dadurch gekennzeichnet, daß quer zu den Führungswandungen (40̸, 41) Seitenwandungen (42, 43) vorgesehen sind, die an den Seitenflächen der Kunststoffwerkstücke (46, 47) den Bereich der Stirnseiten (48, 49) abdeckend anliegend.

12. Schweißvorrichtung nach Anspruch (11),
dadurch gekennzeichnet, daß die Seitenwandungen (42, 43) quer zu ihren Anlageflächen bewegbar sind.

13. Schweißvorrichtung nach einem der Ansprüche (10̸) bis (12),
dadurch gekennzeichnet, daß zur Erhitzung beider Oberflächenseiten der Kunststoffwerkstücke (46, 47) je eine Heizeinrichtung (28, 29) vorgesehen ist.

14. Schweißvorrichtung nach Anspruch (10̸) oder (13),
dadurch gekennzeichnet, daß die Führungswandungen (40̸, 41) aus Metall oder wärmeleitend faserverstärkten Kunststoff und die Seitenwandungen (42, 43) aus wärmeisolierendem Material.

15. Schweißvorrichtung nach einem der Ansprüche (10̸) bis (14),
dadurch gekennzeichnet, daß die Führungswandungen (40̸, 41) und/oder die Seitenwandungen (42, 43) auf den einander zugewandten Seiten eine antiadhäsive Beschichtung tragen.

16. Schweißvorrichtung nach einem der Ansprüche (10̸) bis (15),
dadurch gekennzeichnet, daß die Führungswandungen (40̸, 41) bis in die Spanneinrichtungen (2, 3) reichen und von diesen beaufschlagbar sind.

17. Schweißvorrichtung nach Anspruch (16),
dadurch gekennzeichnet, daß wenigstens eine Führungswandung (40̸, 41) auf jeder Seite der Kunststoffwerkstücke (46, 47) in eingespanntem Zustand bis in die Spanneinrichtungen (2, 3) reicht und von diesen beaufschlagbar ist.

18. Schweißvorrichtung nach Anspruch (16) oder (17),
dadurch gekennzeichnet, daß die Spanneinrichtungen (2, 3) gut wärmeleitende Spannbacken (12, 13, 21, 22) für die Anlage an den Führungswandung (40̸, 41) haben.

19. Schweißvorrichtung nach einem der Ansprüche (10̸) bis (15),
dadurch gekennzeichnet, daß die Spanneinrichtungen über die Führungswandungen miteinander verbunden sind.

20. Schweißvorrichtung nach einem der Ansprüche (10̸) bis (19),
dadurch gekennzeichnet, daß jeder Heizeinrichtung (28, 29) eine Abschirmung (34, 35, 36, 37) zur Führungswandung (40̸, 41) hin zugeordnet ist, wobei die Abschirmung (34, 35, 36, 37) für die Beheizung der Führungswandung(en) (40̸, 41) aus der Abschirmstellung wegsschwenkbar ist.

21. Schweißvorrichtung nach Anspruch (20̸),
dadurch gekennzeichnet, daß die Abschirmung(en) (34, 35, 36, 37) jeweils aus wenigstens einer Abschirmplatte besteht bzw. bestehen, die schwenkbar gelagert ist bzw. sind.

22. Schweißvorrichtung nach einem der Ansprüche (10̸) bis (21),
dadurch gekennzeichnet, daß eine Kühlmittelzuführung (38, 39) für die Beaufschlagung der Außenseite(n) derjenigen Führungswandung(en) (40̸, 41) vorgesehen ist, die einer Heizeinrichtung (28, 29) zugeordnet ist bzw. sind.

23. Schweißvorrichtung nach einem der Ansprüche (10̸) bis (22),
dadurch gekennzeichnet, daß die Heizeinrichtung(en) (28, 29) jeweils als Heizschwert ausgebildet ist.

24. Schweißvorrichtung nach Anspruch (23),
dadurch gekennzeichnet, daß die Heizeinrichtung(en) (28, 29) quer zur Oberflächenseite bewegbar ist bzw. sind.

25. Schweißvorrichtung nach Anspruch (23) und (24),
dadurch gekennzeichnet, daß die Heizeinrichtung(en) (28, 29) elektrisch beheizt und bis in Anlage an die zugehörige Führungswandung (40̸, 41) bewegbar ist bzw. sind.
